(19) **Europäisches Patentamt**
**European Patent Office**
**Office européen des brevets**

(11) **EP 1 477 224 B1**

(12) **EUROPÄISCHE PATENTSCHRIFT**

(45) Veröffentlichungstag und Bekanntmachung des Hinweises auf die Patenterteilung:
**27.07.2011 Patentblatt 2011/30**

(51) Int Cl.:
***B01J 19/32*** *(2006.01)*

(21) Anmeldenummer: **04405240.5**

(22) Anmeldetag: **19.04.2004**

(54) **Verwendung einer Kreuzkanalpackung aus Metallgewebe**

Use of a metal fibrous packing with cross-channel structure

Utilisation d'un garnissage ondulé-croisé composé de fibres métalliques

(84) Benannte Vertragsstaaten:
**AT BE BG CH CY CZ DE DK EE ES FI FR GB GR HU IE IT LI LU MC NL PL PT RO SE SI SK TR**

(30) Priorität: **16.05.2003 EP 03405340**

(43) Veröffentlichungstag der Anmeldung:
**17.11.2004 Patentblatt 2004/47**

(73) Patentinhaber: **Sulzer Chemtech AG**
**8404 Winterthur (CH)**

(72) Erfinder:
• **Kehrer, Florian**
**8307 Effretikon (CH)**
• **Wehrli, Marc, Dr.**
**8400 Winterthur (CH)**

(74) Vertreter: **Sulzer Management AG**
**Patentabteilung / 0067**
**Zürcherstrasse 14**
**8401 Winterthur (CH)**

(56) Entgegenhaltungen:
**EP-A- 0 509 929      EP-A- 0 995 958**
**EP-A- 1 074 296      EP-A- 1 195 563**
**WO-A-97/02880      WO-A-97/16247**
**US-A- 5 950 454      US-B1- 6 349 567**
**US-B1- 6 554 965**

**Beschreibung**

Die Erfindung betrifft eine Verwendung einer Kreuzkanalpackung aus Metallgewebe gemäss Oberbegriff von Anspruch 1.

Packungen mit Kreuzkanalstruktur sind seit einigen Jahrzehnten bekannt: siehe z. B. das Patent CH-A- 398 503, zu dem die Anmeldung 1962 eingereicht worden ist. Die Kreuzkanalpackungen setzen sich in der Regel aus einer Mehrzahl von übereinander angeordneten Packungselementen zusammen, wobei jedes Packungselement aus einer Vielzahl von parallelen Lagen aufgebaut ist. Die Lagen, die gemäss der genannten Patentschrift jeweils aus einer "geriffelten Lamelle" bestehen, berühren sich; sie bilden mit Strömungskanälen, die gegen die Vertikale (Kolonnenachse) geneigt und gegeneinander offen sind, die Kreuzkanalstruktur. Mit einer solchen Kolonnenpackung ist ein Stoff- und/oder Wärmetausch durchführbar, der an der Phasengrenzfläche zwischen einem Rieselfilm auf der Packungsoberfläche und einem durch die Kanäle Messenden Gasstrom stattfindet.

In der genannten CH-A- 398 503 ist eine Kreuzkanalpackung abgebildet, deren "geriffelten Lamellen" gelocht sind. Eine weiteren Kreuzkanalpackung, bei der Löcher in einer besonderen Weise angeordnet sind, ist in der DE-A-26 01 890 beschrieben. In dieser Veröffentlichung wird auf den Zweck der Lochung hingewiesen, der damals bereits aus dem Stand der Technik bekannt gewesen ist: "Die Löcher werden zur Herbeiführung eines verbesserten Gasaustausches über den Querschnitt des Packungskörpers sowie zur Herabsetzung des Druckabfalls längs der Kolonnenachse vorgesehen." Die Lamellen können beispielsweise aus metallischen Folien, Gewirken oder Geweben hergestellt sein. Die Strömungskanäle, die jeweils durch eine Lamelle gebildet werden und somit zur gleichen Lage gehören, werden durch die Löcher so verbunden, dass Ausgleichsvorgänge bezüglich Konzentrations- und Druckunterschieden stattfinden können.

Im Verlauf der weiteren Jahre wurde es als eine Selbstverständlichkeit angesehen, dass die Löcher u. a. zur Herabsetzung des Druckabfalls vorhanden sein müssen. Im Bemühen, bei der Verwendung von Kreuzkanalpackungen immer bessere Ergebnisse zu erzielen, ist man an einem Punkt angelangt, an dem man sich Folgendes fragte: Hat man mit der Lochung tatsächlich eine Massnahme ergriffen, die vorteilhaft ist? Denn es besteht doch zumindest der Nachteil, dass mit der Lochung Material verloren geht; die Löcher stellen eine fehlende Oberfläche dar, die für den Stoffund/oder Wärmetausch nicht zur Verfügung steht.

Aufgabe der Erfindung ist es, eine Verwendung von Kreuzkanalpackungen zu schaffen, mit der sich im Vergleich zu den bekannten Verwendungen bessere Ergebnisse erzielen lassen. Diese Aufgabe wird durch die im Anspruch 1 definierte Verwendung gelöst.

Die Verwendung einer Kreuzkanalpackung aus Metallgewebe betrifft ein Verfahren, bei dem ein Stoff- und/oder Wärmeaustausch zwischen einem Flüssigkeits- und einem Gas- oder Dampfstrom durchgeführt wird. Die verwendete Gewebepackung ist aus vertikalen Lagen zusammengesetzt, die aus gewellten oder plissierten, Strömungskanäle bildenden Metallgeweben bestehen. Der Gas- oder Dampfstrom fliesst in den Strömungskanälen und der Flüssigkeitsstrom auf dem Metallgewebe. Die Strömungskanäle benachbarter Lagen kreuzen sich offen. Der Winkel zwischen den sich kreuzenden Kanälen ist kleiner als rund 100°. Bei diesem Verfahren wird die Gewebepackung mit einer relativ kleinen Flüssigkeitsbelastung beaufschlagt. Das Metallgewebe bildet einen Träger für den Flüssigkeitsstrom, der weitgehend frei von Löchern oder anderen Durchbrüchen ist. Für die Flüssigkeitsbelastung werden Werte gemäss der Beziehung L/a < 10 l/mh gewählt. Dabei ist L die spezifische Flächenbelastung in Volumeneinheit der Flüssigkeit pro Flächeneinheit des Kolonnenquerschnitts, und a ist die spezifische Oberfläche, die das Metallgewebe aufspannt.

Bestimmt man bei der erfindungsgemässen Verwendung der Gewebepackung den Druckverlust und führt eine entsprechende Messung für die bekannte Packung durch, die aus gelochten Metallgeweben gefertigt ist, so gelangt man zu einem unerwarteten Ergebnis. Bei dieser Vergleichsmessung wird ein für das Stoffaustauschverfahren massgebender Parameter gleich gesetzt, nämlich die benetzte Oberfläche der Packung bei gleichem Volumen. Im Widerspruch zur älteren Lehre, gemäss der sich durch die Lochung der Druckabfall längs der Kolonnenachse herabsetzen lasse, stellt man bei der lochfreien Gewebepackung überraschenderweise einen Druckabfall fest, der signifikant kleiner ist. Dies gilt, so lange beim Verfahren die Gewebepackung mit einer relativ kleinen Flüssigkeitsbelastung beaufschlagt wird und daher in entsprechendem Umfang auch der Gasstrom klein ist. Da die Metallgewebe "selbstbenetzende" Träger des Flüssigkeitsstroms bilden, ist eine kleine Flüssigkeitsbelastung tatsächlich auch realisierbar.

Vergleichsmessungen wurden mit Gewebepackungen durchgeführt, deren Lochanteile verschieden gross waren. Bei einer Auswertung der Versuche, bei der auch eine Änderung des hydraulischen Durchmessers berücksichtigt wurde, gelangte man zur Erkenntnis, dass bei der Gewebepackung mit Lochung die Löcher zu einer Druckverlusterhöhung beitragen. Diese Tatsache steht konträr zur Lehrmeinung. Folglich sollte man in der Gewebepackung bei den angegebenen Bedingungen eine Lochung weitgehend oder vollständig unterlassen.

Nachfolgend wird die Erfindung anhand der Zeichnungen erläutert. Es zeigen:

Fig. 1     einen oberen Teil einer Kolonne mit Packungselementen,

Fig. 2     ein Fragment einer Packung mit Kreuzkanalstruktur,

Fig. 3 ein Diagramm zur Trennleistung von zwei miteinander verglichenen Gewebepackungen und

Fig. 4 ein Diagramm zum Druckverlust für die gleichen Packungen.

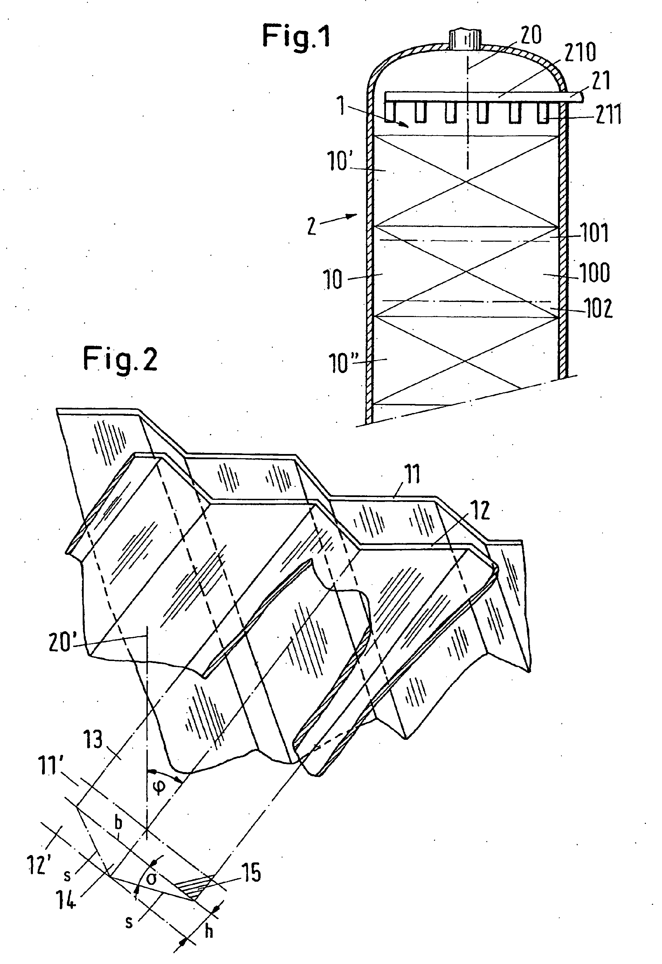

Eine Kolonne 2 mit einer Achse 20 - gemäss Fig. 1 - enthält eine Packung 1 und einen Flüssigkeitsverteiler 21 (Einspeiserohr 210, Verteilerkanäle 211). Mehrere Packungselementen 10, 10', 10" sind übereinander angeordnet. Bei der Verwendung der Kolonne 2 fliessen eine Flüssigkeit und ein Gas oder Dampf im Gegenstrom.

Bei besonderen Ausführungsformen der Kolonne 2 sind in den Packungselementen 10 jeweils eine untere Randzone 102, eine mittlere Zone 100 und eine obere Randzone 102 unterscheidbar. In den Randzonen 101 und 102 an den Rändern der Packungselemente 10 ist aufgrund einer geeigneten Formgebung der Strömungswiderstand gegenüber jenem der mittleren Zone reduziert. Solche vorteilhaften Ausführungsformen sind aus der Patentschrift EP 0 858 366 bekannt.

Jedes Packungselement 10 ist aus einer Vielzahl von parallelen Lagen 11', 12' - siehe Fig. 2 - aufgebaut. In den Lagen 11', 12' werden durch zickzackartig gefaltete Metallgewebe 11 bzw. 12 parallele Kanäle 13 mit dreieckigen Querschnitten 14 gebildet. (Die Metallgewebe 11, 12 können auch gewellt sein.) Die Kanäle sind gegenüber der Vertikalen 20' - einer Parallelen zur Kolonnenachse 20 - geneigt: sie schliessen mit ihr einen Neigungswinkel φ ein. An einer Berührungsebene 15 zwischen benachtbarten Lagen 11' und 12' kreuzen sich die in dieser Ebene 15 offenen Kanäle 13 der Lage 12' mit entsprechenden Kanälen der benachbarten Lage 11'. Der Kreuzungswinkel, der 2φ beträgt, ist kleiner als rund 100°. Der Querschnitt 14 hat die Form eines gleichschenkligen Dreiecks mit einer Höhe h (= Breite der Lage 12'), Schenkeln s und einer Basis b, die auch als Schritt bezeichnet wird. Der Winkel σ zwischen Schenkel s und Basis b beträgt in vielen Fällen 45°. Die spezifische Oberfläche a dieser Packung mit σ = 45° ist im Idealfall, dass die Faltkanten keine Rundungen aufweisen, durch den Ausdruck $2\sqrt{2}/h$ gegeben. Es werden dabei beide Seiten des Metallgewebes gezählt.

Die spezifische Oberfläche a ist unabhängig davon definiert, ob eine Lochung vorliegt oder nicht. Die benetzte Oberfläche a' hingegen hängt davon ab, ob das Metallgewebe gelocht ist. Bei den oben erwähnten Vergleichsversuchen wurden Packungen verglichen, bei denen die benetzten Oberflächen a' gleich gross waren.

Für eine erste Gewebepackung P1 mit einem grossen Anteil an Lochung wurden folgende Abmessungen gewählt: Lagenhöhe h = 6.5 mm; Schritt b = 10.2 mm; spezifische Oberfläche a = 507 $m^2/m^3$; benetzte Oberfläche a' = 450 $m^2/m^3$; Neigungswinkel φ = 30°; Lochung: 11 % Lochanteil, d.h. Anteil der Gewebefläche, die durchbrochen ist (Lochdurchmesser: 4mm).

Für eine zweite Gewebepackung P2 mit einem kleineren Anteil an Lochung wurden folgende Abmessungen gewählt: Lagenhöhe h = 7.0 mm; Schritt b = 10.2 mm; spezifische Oberfläche a = 475 $m^2/m^3$; benetzte Oberfläche a' = 450 $m^2/m^3$; Neigungswinkel φ = 30°; Lochung: 5 % Lochanteil (Lochdurchmesser: 4mm).

Es wurden Messungen mit den beiden Packungen P1 und P2 in einer Kolonne mit 250 mm Durchmesser und bei 50 mbar Kopfdruck vorgenommen. Die Messungen wurden mit einem zu trennenden Gemisch aus Chlorbenzol und Ethylbenzol durchgeführt.

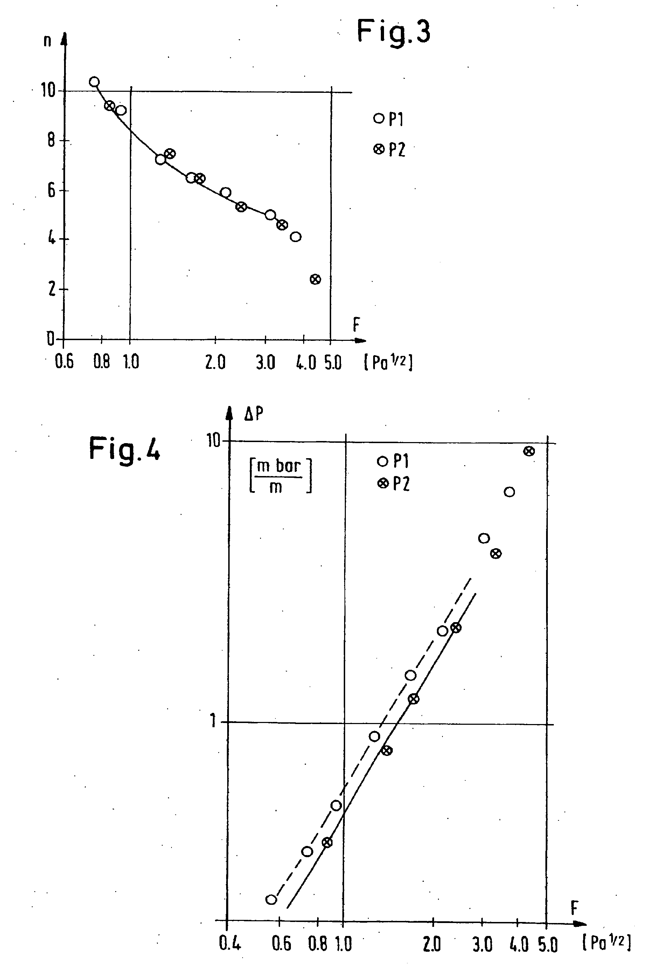

In den Diagrammen der Figuren 3 und 4 sind Messergebnisse für die beiden Packungen P1 und P2 dargestellt (logarithmische Skalen). Im Diagramm der Fig. 3 ist die Trennleistung in Abhängigkeit vom F-Faktor $F = v_G\sqrt{\rho_G}$ (mit $v_G$ = Strömungsgeschwindigkeit und $\rho_G$ = Dichte des Gases G) angegeben. Die Trennleistung (engl. "separation efficiency") wird als Anzahl n von Theoretischen Trennstufen pro Meter (NTSM) ausgedrückt. Es ist für die beiden Packungen P1 und P2 kein signifikanter Unterschied festzustellen. Ein Unterschied besteht aber im Diagramm der Fig. 4. Dieses zeigt den Druckverlust, der jeweils in den Packungen P1 und P2 gemessen worden ist.

Die verglichenen Packungen P1 und P2 weisen die gleiche benetzte Oberfläche a' auf, jedoch verschiedene spezifische Oberflächen a und somit verschiedene hydraulische Durchmesser $d_h$. Bei einem grösseren hydraulischen Durchmesser (P2 mit $d_h$ = 7.9 mm) fällt der Druckverlust etwas geringer aus als bei einem kleineren (P1 mit $d_h$ = 7.4 mm). Überraschenderweise ist der Druckverlust bei der Packung P2 in einem stärkeren Masse reduziert, als aufgrund des hydraulischen Durchmessers zu erwarten wäre.

Unter den für die untersuchten Packungen typischen Bedingungen gilt für den Druckverlust näherungsweise Proportionalität zum inversen hydraulischen Durchmesser. Dies lässt sich anhand einem bewährten Druckverlustmodell zeigen (siehe J. A. Rocha, J. L. Bravo, J. R. Fair, "Distillation Columns Containing Structured packings: A Comprehensive Model for Their Performance. 1. Hydraulic Models", Ind. Eng. Chem. Res. 1993, 32, 641-651). Es ergibt sich so, dass die Packung P2 einen um 6.3 % kleineren Druckverlust als die Packung P1 erzeugen müsste. Gemessen wird aber (vgl. Fig. 4) eine deutlich grössere Reduktion, nämlich eine Reduktion um 20 %.

Erniedrigt man die Anzahl Löcher bei gleicher benetzter Fläche, so wäre Folgendes zu erwarten: a) Reduktion des Druckverlusts um ca. 6 bis 7 %, weil der hydraulische Durchmesser zunimmt (nachweisbar mit auf Experimente abgestimmten Korrelationen); b) Zunahme des Druckverlusts um einen nicht bezifferbaren Betrag, weil weniger Löcher da sind und die Packung weniger durchlässig ist; c) die beiden Beiträge könnten sich bestenfalls aufheben.

Tatsächlich macht man folgende Erfahrung:

- Der Druckverlust reduziert sich um ungefähr 6 bis 7%, weil der hydraulische Durchmesser zunimmt.

- Der Druckverlust reduziert sich um weitere rund 14%, was sich nur auf die Änderung der Anzahl Löcher zurückführen lässt.

Folglich tragen die Löcher bei der Gewebepackung zu einer Druckverlusterhöhung bei. Diese Tatsache ist der Lehrmeinung diametral entgegengesetzt.

Bei der erfindungsgemässen Verwendung einer Kreuzkanalpackung aus Metallgewebe bildet das Metallgewebe einen Träger für den Flüssigkeitsstrom, der weitgehend frei von Löchern oder anderen Durchbrüchen ist. Vorausgesetzt ist bei diesem Verfahren, dass für die Flüssigkeitsbelastung Werte gemäss folgender Beziehung

$$q' = L/a < 0.01 \text{ m}^3/\text{mh} = 10 \text{ l/mh}$$

gewählt werden, wobei die verwendeten Grössen folgende Bedeutung haben:

- L ist die spezifische Flächenbelastung in Volumeneinheit der Flüssigkeit pro Flächeneinheit des Kolonnenquerschnitts;
- a ist die spezifische Oberfläche, die das Metallgewebe aufspannt;
- q' ist das Flüssigkeitsvolumen pro Zeiteinheit und Lauflänge des Gewebes (Die Lauflänge ist die doppelt gezählte Länge der Gewebekante, auf einem Kolonnenquerschnitt gemessen).

Die Menge q' = 10 l/mh entspricht L = 4.5 m³/m²h (pro Quadratmeter Kolonnenquerschnitt und Stunde) bei einer Gewebepackung, für die a = a' = 450 m²/m³ ist (keine Lochung). Diese maximale Belastung ist typisch bei totalem Rücklauf und für folgende Fälle:

- Testgemisch Cis-/Transdekalin bei 50 mbar Kopfdruck und einem F-Faktor F kleiner als 2.2 √Pa

- Testgemisch Cis-/Transdekalin bei 10 mbar Kopfdruck und F < 5 √Pa

- Testgemisch Chlorbenzol/Ethylbenzol bei 50 mbar Kopfdruck und F < 2.6 √Pa

- Testgemisch Chlorbenzol/Ethylbenzol bei 100 mbar Kopfdruck und F < 1.8 √Pa

Die Belastung ist somit typisch für die Verwendung der Kreuzkanalpackung im Vakuum unter 100 mbar.

Die erfindungsgemässe Verwendung einer Kreuzkanalpackung ist besonders geeignet, wenn mehrere Packungselemente (10, 10', 10") übereinander angeordnet sind und wenn folgendes gilt: In den Packungselementen sind jeweils eine untere Randzone (102), eine mittlere Zone (100) und eine obere Randzone (102) unterscheidbar. In den Randzonen (101, 102) an mindestens einem der Ränder der Packungselemente ist aufgrund einer geeigneten Formgebung der Strömungswiderstand gegenüber jenem der mittleren Zone reduziert. Bei dieser Packung ergibt sich eine zusätzliche Verbesserung hinsichtlich dem Druckabfall. Insbesondere ist die Formgebung der Randzone (101, 102) so ausgeführt, dass die lokale Richtung der Strömungskanäle sich jeweils progressiv ändert, so dass die Strömungskanäle einen sigmoiden Verlauf haben.

**Patentansprüche**

1. Verwendung einer Kreuzkanalpackung (1) aus Metallgewebe für ein Verfahren, bei dem ein Stoff- und/oder Wärmeaustausch zwischen einem Flüssigkeits- und einem Gas- oder Dampfstrom durchgeführt wird, wobei die Kreuzkanalpackung (1) aus vertikalen Lagen (11', 12') zusammengesetzt ist, die aus gewellten oder plissierten, Strömungskanäle (13) bildenden Metallgeweben (11, 12) bestehen, der Gas- oder Dampfstrom in den Strömungskanälen (13) und der Flüssigkeitsstrom auf dem Metallgewebe fliessen, die Strömungskanäle (13) benachbarter Lagen (11', 12') sich offen kreuzen und der Winkel zwischen den sich kreuzenden Strömungskanälen (13) kleiner als rund 100° ist, wobei die Kreuzkanalpackung (1) mehrere Packungselemente (10, 10', 10") enthält, die übereinander angeordnet sind und wobei in den Packungselementen (10, 10', 10") jeweils eine untere Randzone (102), eine mittlere Zone (100) und eine obere Randzone (102) unterscheidbar sind, wobei in den Randzonen (101, 102) an mindestens einem der Ränder der Packungselemente aufgrund einer geeigneten Formgebung der Strömungswiderstand gegenüber jenem der mittleren Zone reduziert ist, **dadurch gekennzeichnet dass** bei dem Verfahren die Kreuzkanalpackung (1) mit einer relativ kleinen Flüssigkeitsbelastung beaufschlagt wird, sodass das Metallgewebe einen Träger für den Flüssigkeitsstrom bildet, der weitgehend frei von Löchern oder anderen Durchbrüchen ist, und dass für die Flüssigkeitsbelastung Werte gemäss folgender Beziehung

$$L/a < 10 \text{ l/mh}$$

gewählt werden, wobei:

   - L die spezifische Flächenbelastung in Volumeneinheit der Flüssigkeit pro Flächeneinheit des Kolonnenquerschnitts ist und
- a die spezifische Oberfläche ist, die das Metallgewebe aufspannt.

2. Verwendung einer Kreuzkanalpackung nach Anspruch 1, **dadurch gekennzeichnet, dass** der Flüssigkeits- und der Gas- oder Dampfstrom im Gegenstrom fliessen.

3. Verwendung einer Kreuzkanalpackung nach Anspruch 1 oder 2, **dadurch gekennzeichnet, dass**

$$L/a < 1 \; l/mh.$$

4. Verwendung einer Kreuzkanalpackung nach Anspruch 1 oder 2, **dadurch gekennzeichnet, dass**

$$L/a < 0.2 \; l/mh.$$

5. Verwendung einer Kreuzkanalpackung nach einem der Ansprüche 1 bis 4, **dadurch gekennzeichnet, dass** die spezifische Oberfläche a der Packung zwischen 300 und 800 $m^2/m^3$ beträgt.

6. Verwendung einer Kreuzkanalpackung nach einem der Ansprüche 1 bis 4, **dadurch gekennzeichnet, dass** die spezifische Oberfläche a der Packung zwischen 300 und 500 $m^2/m^3$ beträgt.

7. Verwendung einer Kreuzkanalpackung nach Anspruch 1, **dadurch gekennzeichnet, dass** die Formgebung der Randzone (101, 102) so ausgeführt ist, dass die lokale Richtung der Strömungskanäle sich jeweils progressiv ändert.

**Claims**

1. Use of a cross-passage packing (1) made of a metal fabric for a method in which an exchange of material and/or of heat is carried out between a liquid stream and a gas or vapour stream, with the cross-passage packing (1) being composed of vertical layers (11', 12') which consist of corrugated or pleated metal fabrics (11, 12) which form flow passages (13), the gas or vapour stream flowing in the flow passages (13) and the liquid stream flowing on the metal fabric, the flow passages (13) of adjacent layers crossing in an open manner and the angle between crossing passages being lower than approximately 100°, wherein the cross passage packing (1) comprises a plurality of packing elements (10, 10', 10") arranged on top of one another; and in that a lower end zone (102), a central zone (100) and an upper end zone (102) can be distinguished in each of the packing elements (10, 10', 10") with the flow resistance in the end zones (101, 102) at at least one of the ends of the packing elements being reduced with respect to that of the central zone due to a suitable shaping, **characterised in that** the cross passage packing (1) is acted on by a relatively small liquid loading; **in that** the metal fabric forms a carrier for the liquid stream which is largely free of holes or other openings; and **in that** values for the liquid loading are selected in accordance with the following relationship

$$L/a < 10 \; l/mh$$

where

- L is the specific surface loading in volume units of the liquid per surface unit of the column cross-section; and
- a is the specific surface which the metal fabric spans.

2. Use of a cross-passage packing in accordance with claim 1, **characterised in that** the liquid stream and the gas or vapour stream flow in counter flow.

3. Use of a cross-passage packing in accordance with claim 1 or claim 2, **characterised in that**

$$L/a < 1 \; l/mh.$$

4. Use of a cross-passage packing in accordance with claim 1 or claim 2, **characterised in that**

$$L/a < 0.2 \; l/mh.$$

5. Use of a cross-passage packing in accordance with any of claims 1 to 4, **characterised in that** the specific surface a of the packing amounts to between 300 and 800 $m^2/m^3$.

6. Use of a cross-passage packing in accordance with any of claims 1 to 4, **characterised in that** the specific surface a of the packing amounts to between 300 and 500 $m^2/m^3$.

7. Use of a cross-passage packing in accordance with claim 1, **characterised in that** the shaping of the end zone (101, 102) is designed such that the local direction of the flow passages changes progressively in each case.

## Revendications

1. Utilisation d'un garnissage ondulé-croisé (1) en tissu métallique pour un procédé, dans lequel un échange de matière et/ou de chaleur est exécuté entre un écoulement de liquide et un écoulement de gaz ou de vapeur, où le garnissage ondulé-croisé (1) est constitué de couches verticales (11', 12') qui sont formées par des tissus métalliques (11, 12) ondulés ou plissés, formant des canaux d'écoulement (13), l'écoulement de gaz ou de vapeur s'écoule dans les canaux d'écoulement (13) et l'écoulement de liquide sur le tissu métallique, les canaux d'écoulement (13) de couches avoisinantes (11', 12') se croisent ouvertement, et l'angle entre les canaux d'écoulement (13) qui se croisent est plus petit qu'environ 100°, où le garnissage ondulé-croisé (11) contient plusieurs éléments de garnissage (10, 10', 10") qui sont disposés les uns au-dessus des autres, et où dans les éléments de garnissage (10, 10', 10"), respectivement une zone de bord inférieure (102), une zone médiane (100) et une zone de bord supérieure (102) peuvent être distinguées, où dans les zones de bord (101, 102), à au moins un des bords des éléments de garnissage, en raison d'une configuration appropriée, la résistance à l'écoulement est réduite par rapport à celle de la zone médiane, **caractérisée en ce que** dans le procédé, le garnissage ondulé-croisé (11) est chargé par une charge de liquide relativement petite de sorte que le tissu métallique forme un support pour l'écoulement du liquide qui est sensiblement exempt de trous ou autres perçages, et **en ce que** pour la charge de liquide, des valeurs selon la relation suivante

$$L/a < 10 \; l/mh$$

sont sélectionnées, où:

- L représente la charge de face spécifique en unité de volume du liquide par unité de face de la section transversale de colonne, et
- a est la surface spécifique que forme le tissu métallique.

2. Utilisation d'un garnissage ondulé-croisé selon la revendication 1, **caractérisée en ce que** l'écoulement de liquide et l'écoulement de gaz ou de vapeur s'écoulent à contre-courant.

3. Utilisation d'un garnissage ondulé-croisé selon la revendication 1 ou 2, **caractérisé en ce que**

$$L/a < 1 \; l/mh.$$

4. Utilisation d'un garnissage ondulé-croisé selon la revendication 1 ou 2, **caractérisé en ce que**

$$L/a < 0,2 \; l/mh.$$

5. Utilisation d'un garnissage ondulé-croisé selon l'une des revendications 1 à 4, **caractérisée en ce que** la surface spécifique a du garnissage est entre 300 et 800 $m^2/m^3$.

6. Utilisation d'un garnissage ondulé-croisé selon l'une des revendications 1 à 4, **caractérisée en ce que** la surface spécifique a du garnissage est entre 300 et 500 $m^2/m^3$.

7. Utilisation d'un garnissage ondulé-croisé selon la revendication 1, **caractérisée en ce que** la configuration de la zone de bord (101, 102) est réalisée de telle sorte que la direction locale des canaux d'écoulement se modifie à chaque fois progressivement.

# Fig.1

# Fig.2

# Fig.3

○ P1
⊗ P2

# Fig.4

○ P1
⊗ P2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CH 398503 A
- DE 2601890 A

- EP 0858366 A

**In der Beschreibung aufgeführte Nicht-Patentliteratur**

- **J. A. Rocha ; J. L. Bravo ; J. R. Fair.** Distillation Columns Containing Structured packings: A Comprehensive Model for Their Performance. 1. Hydraulic Models. *Ind. Eng. Chem. Res.,* 1993, vol. 32, 641-651